(19)

**Europäisches Patentamt**

**European Patent Office**

**Office européen des brevets**

(11) **EP 4 435 683 A1**

(12) **EUROPEAN PATENT APPLICATION**

(43) Date of publication:
**25.09.2024 Bulletin 2024/39**

(21) Application number: **23195732.5**

(22) Date of filing: **06.09.2023**

(51) International Patent Classification (IPC):
**G06Q 10/00** (2023.01)    **G06Q 10/04** (2023.01)
**G06Q 10/06** (2023.01)    **G06Q 50/02** (2024.01)

(52) Cooperative Patent Classification (CPC):
**G06Q 10/00; G06Q 10/04; G06Q 10/06;
G06Q 50/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2023 IN 202321020023**

(71) Applicant: **Tata Consultancy Services Limited
Maharashtra (IN)**

(72) Inventors:
• **LONKAR, VAIBHAV SADASHIV
411057 Pune, Maharashtra (IN)**
• **SINGH, INESHKUMAR
400601 Thane (West), Maharashtra (IN)**

• **MOHITE, JAYANTRAO
400601 Thane (West), Maharashtra (IN)**
• **SARANGI, SANAT
400601 Thane (West), Maharashtra (IN)**
• **SAWANT, SURYAKANT ASHOK
411013 Pune - Maharashtra (IN)**
• **SAKKAN, MARIAPPAN
600113 Chennai, Tamil Nadu (IN)**
• **PAPPULA, SRINIVASU
500081 Hyderabad - Telangana (IN)**

(74) Representative: **Goddar, Heinz J.
Boehmert & Boehmert
Anwaltspartnerschaft mbB
Pettenkoferstrasse 22
80336 München (DE)**

Remarks:
Amended claims in accordance with Rule 137(2)
EPC.

(54) **SYSTEMS AND METHODS FOR MONITORING AND MANAGING FARM VERSIONS AND MEASURING PORTABILITY TO TARGET FARMS**

(57) Conventional approaches lack in traceability of various factors that led to changes in farms states. Further, conventional approaches for managing farms, and associated data obtained from various sources do not fully allow for employing farm's practices to other similar conditions as they may have adverse effects over other identical/similar crops during cultivations. Present disclosure present systems and methods that codify/pre-process and store farm parameters, associated versions and farm interactions in a systematic manner, along with associated knowledge, inferences, that bring changes to a farm's state, which can be referred as farm versions. The inferences, and relationships between farm configurations, versions and the like are used by the system to generate farm portability score for target farm and identify farm state portability. Once the current farm state is identified, the system further creates an optimized routing mechanism for the target farm to attend an optimal state.

receiving a plurality of parameters of a plurality of farms, wherein the plurality of parameters are captured using one or more sensing devices at a plurality of time periods — 202

pre-processing the plurality of parameters to obtain a set of pre-processed data comprising a plurality of versions of the plurality of farms, wherein each version from the plurality of versions comprises (i) an associated state of each farm amongst the plurality of farms, and (ii) one or more associated events — 204

determining at least a subset of parameters amongst the plurality of parameters based on the set of pre-processed data comprising the plurality of versions of the plurality of farms — 206

computing a farm portability score for each of the plurality of farms based on at least the subset of parameters — 208

identifying one or more target farms amongst the plurality of farms based on the farm portability score — 210

analyzing spatial and temporal similarity of one or more source farms and the one or more target farms to obtain a farm portability similarity index for each of the one or more target farms — 212

determining an optimal state for each of the one or more target farms based on the farm portability similarity index and identifying an optimal traversal route for each of the one or more target farms to transform each target farm from a current state to attain the optimal state — 214

**FIG. 2**

EP 4 435 683 A1

**Description**

CROSS-REFERENCE TO RELATED APPLICATIONS AND PRIORITY

The present application claims priority to Indian application no. 202321020023, filed on March 22, 2023.

TECHNICAL FIELD

The disclosure herein generally relates to farm versioning and portability, and, more particularly, to systems and method for methods for monitoring and managing farm versions and measuring portability to target farms.

BACKGROUND

As per the Food and Agriculture Organization (FAO) of the United Nations (UN), small family farmers produce a one third (1/3rd) of the world's food. Also, around 58% of the Indian population is dependent on agriculture. Countries like India are having small and fragmented land holding as opposed to some of the developed countries such as the United States of America (USA) and other European countries where the land holdings are large in size. During the crop cultivation cycle farmers carry out various field operations. While the crop grows, many parameters are measured and monitored using various hardware devices (e.g., sensors, and the like), satellite, weather, soil parameters, drones, cameras, laboratory tests, etc. This huge data is measured and monitored for multiple farms during the season. Using the measured and monitored data, some inferences can be drawn out. However, such data that is measured, monitored, and inferenced, and other associated knowledge are not being utilized to the extent it has to be in the present situation. This leads to lack in traceability of various factors that led to changes in farms states. Moreover, presently, there is no system devised in place which stores the data, information, and knowledge.

Further, conventional approaches for managing farms, and associated data obtained from various sources do not fully allow for employing farm's practices to other farms in similar conditions as they may have adverse effects over other crops during cultivations. Thus, such traditional practices are not helping in optimization of farm operations and further fail to achieve desired goals.

SUMMARY

Embodiments of the present disclosure present technological improvements as solutions to one or more of the above-mentioned technical problems recognized by the inventors in conventional systems.

For example, in one aspect, there is provided a processor implemented method for monitoring and managing farm versions and measuring portability to target farms. The method comprises receiving, via one or more hardware processors, a plurality of parameters of a plurality of farms, wherein the plurality of parameters are captured using one or more sensing devices at a plurality of time periods; pre-processing, via the one or more hardware processors, the plurality of parameters to obtain a set of pre-processed data comprising a plurality of versions of the plurality of farms, wherein each version from the plurality of versions comprises (i) an associated state of each farm amongst the plurality of farms, and (ii) one or more associated events; determining, via the one or more hardware processors, at least a subset of parameters amongst the plurality of parameters based on the set of pre-processed data comprising the plurality of versions of the plurality of farms; computing, via the one or more hardware processors, a farm portability score for each of the plurality of farms based on at least the subset of parameters; identifying, via the one or more hardware processors, one or more target farms amongst the plurality of farms based on the farm portability score; analyzing, via the one or more hardware processors, spatial and temporal similarity of one or more source farms and the one or more target farms to obtain a farm portability similarity index for each of the one or more target farms; determining, via the one or more hardware processors, an optimal state for each of the one or more target farms based on the farm portability similarity index and identifying an optimal traversal route for each of the one or more target farms to transform each target farm from a current state to the optimal state.

In an embodiment, the optimal traversal route comprises a first set of instructions to be performed by each of the one or more target farms.

In an embodiment, the method further comprises monitoring the current state, and one or more intermediary states of the one or more target farms based on the first set of instructions being performed.

In an embodiment, the method further comprises identifying one or more deviations in the one or more intermediary states of each of the one or more target farms based on the first set of instructions being performed. In an embodiment, the one or more deviations are identified based on a comparison of the one or more intermediary states and one or more reference intermediary states.

In an embodiment, the method further comprises generating an updated optimal traversal route comprising a second set of instructions to be performed by each of the one or more target farms based on the comparison. In an embodiment, the second set of instructions comprises instructions that are (i) different from the first set of instructions, or (ii) at least a subset of the first set of instructions.

In an embodiment, the first set of instructions and the second set of instructions are generated using at least one of one or more semantic ontological database, and one or more knowledge graphs.

In an embodiment, the optimal state is attained by each of the one or more target farms when one or more associated performance affecting parameters reach an associated predefined threshold.

In another aspect, there is provided a processor implemented system for monitoring and managing farm versions and measuring portability to target farms. The system comprises: a memory storing instructions; one or more communication interfaces; and one or more hardware processors coupled to the memory via the one or more communication interfaces, wherein the one or more hardware processors are configured by the instructions to: receive a plurality of parameters of a plurality of farms, wherein the plurality of parameters are captured using one or more sensing devices at a plurality of time periods; pre-processing the plurality of parameters to obtain a set of pre-processed data comprising a plurality of versions of the plurality of farms, wherein each version from the plurality of versions comprises (i) an associated state of each farm amongst the plurality of farms, and (ii) one or more associated events; determining at least a subset of parameters amongst the plurality of parameters based on the set of pre-processed data comprising the plurality of versions of the plurality of farms; computing a farm portability score for each of the plurality of farms based on at least the subset of parameters; identifying one or more target farms amongst the plurality of farms based on the farm portability score; analyzing spatial and temporal similarity of one or more source farms and the one or more target farms to obtain a farm portability similarity index for each of the one or more target farms; determining an optimal state for each of the one or more target farms based on the farm portability similarity index and identifying an optimal traversal route for each of the one or more target farms to transform each target farm from a current state to the optimal state.

In an embodiment, the optimal traversal route comprises a first set of instructions to be performed by each of the one or more target farms.

In an embodiment, the one or more hardware processors are further configured by the instructions to monitor the current state, and one or more intermediary states of the one or more target farms based on the first set of instructions being performed.

In an embodiment, the one or more hardware processors are further configured by the instructions to identify one or more deviations in the one or more intermediary states of each of the one or more target farms based on the first set of instructions being performed. In an embodiment, the one or more deviations are identified based on a comparison of the one or more intermediary states and one or more reference intermediary states.

In an embodiment, the one or more hardware processors are further configured by the instructions to generate an updated optimal traversal route comprising a second set of instructions to be performed by each of the one or more target farms based on the comparison. In an embodiment, the second set of instructions comprises instructions that are (i) different from the first set of instructions, or (ii) at least a subset of the first set of instructions.

In an embodiment, the first set of instructions and the second set of instructions are generated using at least one of one or more semantic ontological database, and one or more knowledge graphs.

In an embodiment, the optimal state is attained by each of the one or more target farms when one or more associated performance affecting parameters reach an associated predefined threshold.

In yet another aspect, there are provided one or more non-transitory machine-readable information storage mediums comprising one or more instructions which when executed by one or more hardware processors cause monitoring and managing farm versions and measuring portability to target farms by receiving a plurality of parameters of a plurality of farms, wherein the plurality of parameters are captured using one or more sensing devices at a plurality of time periods; pre-processing the plurality of parameters to obtain a set of pre-processed data comprising a plurality of versions of the plurality of farms, wherein each version from the plurality of versions comprises (i) an associated state of each farm amongst the plurality of farms, and (ii) one or more associated events; determining at least a subset of parameters amongst the plurality of parameters based on the set of pre-processed data comprising the plurality of versions of the plurality of farms; computing a farm portability score for each of the plurality of farms based on at least the subset of parameters; identifying, via the one or more hardware processors, one or more target farms amongst the plurality of farms based on the farm portability score; analyzing spatial and temporal similarity of one or more source farms and the one or more target farms to obtain a farm portability similarity index for each of the one or more target farms; determining an optimal state for each of the one or more target farms based on the farm portability similarity index and identifying an optimal traversal route for each of the one or more target farms to transform each target farm from a current state to the optimal state.

In an embodiment, the optimal traversal route comprises a first set of instructions to be performed by each of the one or more target farms.

In an embodiment, the one or more instructions which when executed by one or more hardware processors further cause monitoring the current state, and one or more intermediary states of the one or more target farms based on the first set of instructions being performed.

In an embodiment, the one or more instructions which when executed by one or more hardware processors further cause identifying one or more deviations in the one or more intermediary states of each of the one or more target farms based on the first set of instructions being performed. In an embodiment, the one or more deviations are identified based on a comparison of the one or more intermediary states and one or more reference intermediary states.

In an embodiment, the one or more instructions which when executed by one or more hardware processors further cause generating an updated optimal traversal route comprising a second set of instructions to be performed by each of the one or more target farms based on the comparison. In an embodiment, the second set of instructions comprises instructions that are (i) different from the first set of instructions, or (ii) at least a subset of the first set of instructions.

In an embodiment, the first set of instructions and the second set of instructions are generated using at least one of one or more semantic ontological database, and one or more knowledge graphs.

In an embodiment, the optimal state is attained by each of the one or more target farms when one or more associated performance affecting parameters reach an associated predefined threshold.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for monitoring and managing farm versions and measuring portability to target farms, in accordance with an embodiment of the present disclosure.

FIG. 2 depicts an exemplary flow chart illustrating a method for monitoring and managing farm versions and measuring portability to target farms, using the system of FIG. 1, in accordance with an embodiment of the present disclosure.

FIG. 3 depicts an exemplary view of farm portability similarity index between one or more source farms and one or more target farms, in accordance with an embodiment of the present disclosure.

FIG. 4 depicts an exemplary view of the one or more source farms and the one or more target farms and associated versions for which instructions need to be ported to attain desired optimal state, with respective farm portability similarity index and farm portability score computed therein, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned earlier, conventional approaches lack in traceability of various factors that led to changes in farms states. Further, conventional approaches for managing farms, and associated data obtained from various sources do not fully allow for employing farm's practices to other farms in similar conditions as they may have adverse effects over other identical/similar crops during cultivations. Thus, such traditional practices are not helping in optimization of farm operations and further fail to achieve desired goals. Moreover, presently, there is no systems devised in place which stores the data, information, knowledge, outputs in a versioned manner, that can enable tracing the factors that led to changes in a farm's state.

Farmers carry out multiple field operations in their farms during crop growth season. Season by season, crop growth progress, soil, weather, and various direct/indirect parameters are measured using a variety of hardware devices (e.g., sensing devices, remotely connected servers/computer systems, and the like), software, satellite, and the like. Each farm follows its unique set of practices and has got some intermediate and final outputs in terms of yield, output quality, Return on Investment (ROI), saving of input costs, gains in carbon credits (or sequestered carbon), etc. With every passing quantum of time, the state of farm changes due to farm operation and farm's interaction with its environmental conditions (e.g., season, weather, and the like).

Embodiments of the present disclosure present systems and methods that codify and store farm parameters, associated versions and farm interactions in a systematic manner, along with associated knowledge, inferences, that bring changes to a farm's state, which can be referred as farm versions. This codified information contains cause-effect relationships between the effect, i.e., each farm's version details, along with the causes, i.e., the factors that led to change in the version, which sort of creates a version management system for various farms. In other words, all these semantic inferences and relationships are stored in the system as states, farm configurations, data, metadata, and the like. These inferences, indicators and relationships between the farm configurations, versions and several other factors are used by the system to generate farm portability score for each farm and identify farm state portability or the k nearest neighbor farms that are compatible for portability of farm states. Once the current farm state is identified, the system further creates an optimized routing mechanism to help a farmer or allied entity to define their current and starting state, and the desired end-goal in terms of performance affecting parameters, for examples, yield, quality, return on investment (RoI), sequestered carbon, and the like. Taking these as inputs and farm version information the system continually monitors progress of the intermediary states to predict and identify the most optimal route that the farmer or allied entity can take to reach the desired end-goal. Once the target farm state or the associated performance affecting parameters reach an associated threshold, the target farm state may be determined as the desired target farm state.

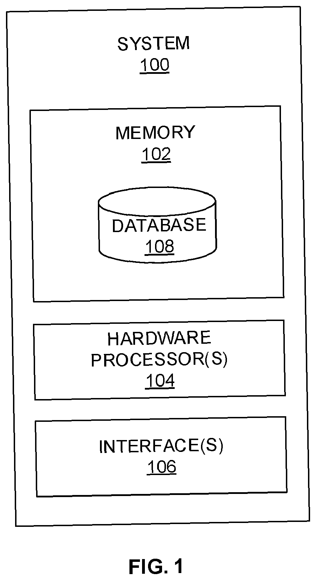

Referring now to the drawings, and more particularly to FIG. 1 through 4, where similar reference characters denote corresponding features consistently throughout the figures, there are shown preferred embodiments and these embodiments are described in the context of the following exemplary system and/or method.

FIG. 1 depicts an exemplary system 100 for monitoring and managing farm versions and measuring portability to target farms, in accordance with an embodiment of the present disclosure. In an embodiment, the system 100 may also be referred as 'farm monitoring system', 'farm version managing and portability system', and interchangeably used hereinafter. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises real-time parameters, near real-time parameters, historical data, pertaining to each farm which are obtained from various sensing devices (e.g., sensors, remotely connected servers/computer systems, satellites, drones, cameras, and the like. The database 108 further comprises pre-processed parameters that are converted into one or more versions for each of the farms, farm portability score for each farm, spatial and temporal similarity of one or more source farms and the one or more target farms, optimal state for each target farm, optimal traversal route for each farm to transform its current state to desired state, and the like. The memory 102 further stores various techniques for instance, one or more pre-processing technique(s), one or more farm portability score computation techniques, one or more farm portability similarity index computation techniques, one or more optimal traversal route determine technique, and the like which when executed by the one or more hardware processors 104 enable the system 100 to perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

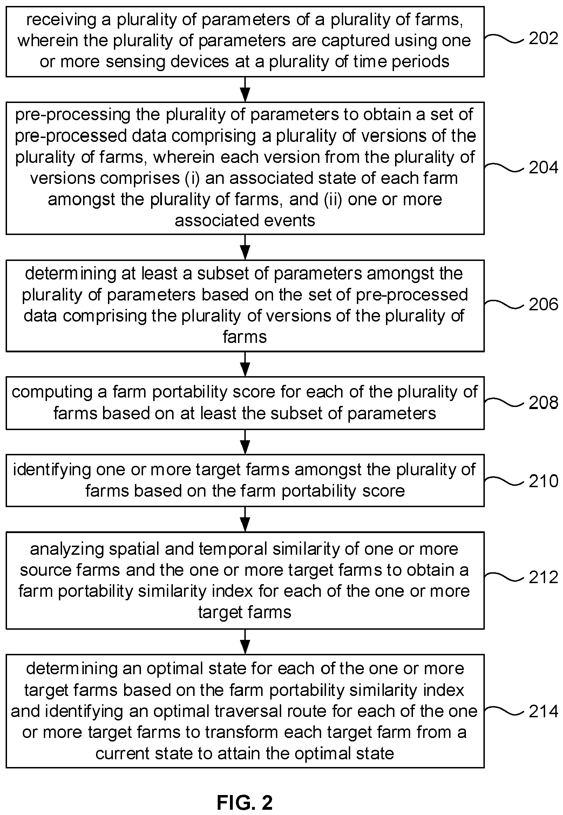

FIG. 2, with reference to FIG. 1, depicts an exemplary flow chart illustrating a method for monitoring and managing farm versions and measuring portability to target farms, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

At step 202 of the method of the present disclosure, the one or more hardware processors 104 receive a plurality of parameters of a plurality of farms. The plurality of parameters are captured using one or more sensing devices at a plurality of time periods. For instance, the one or more sensing devices may include, but are not limited to, sensors deployed in and around the plurality of farms, remotely connected servers/computer systems that are enabled with sensors to capture the plurality of parameters, drones, satellites, image capturing devices, and the like. The plurality of parameters, include, but are not limited to all the information associated with the plurality of farm such as (i) various field operations and observations carried out by farmer(s), laborers or other stakeholders, (ii) natural events, (iii) data monitored using non-invasive and on-field sensors such as satellite images, data on soil nutrients (N, P, K, etc.), soil organic carbon (SOC), moisture, temperature, pH, EC, CO2 sensors etc., (iv) data provided by the farmers via human sensing, (v) various intermediate states, (vi) inferences generated out of various actions, and the like. Below Table 1 illustrates parameters captured from various sensing devices pertaining to various farms.

Table 1

| Farms | Parameters | | |
|---|---|---|---|
| | Soil Moisture (%) | SOC % | Nitrogen (N) (%) |
| F1 | 27.6 | 2.1 | 0.037 |
| F2 | 20.7 | 2.8 | 0.065 |
| F3 | 32.1 | 3.2 | 0.049 |
| F4 | 25.6 | 2.4 | 0.05 |

The above table shows values of parameters such as Soil Organic Carbon, Soil Moisture and Nitrogen for four example farms (F1-F4) at a time instance t1 for a crop C1.

At step 204 of the method of the present disclosure, the one or more hardware processors 104 pre-process the plurality of parameters to obtain a set of pre-processed data comprising a plurality of versions of the plurality of farms. Each version from the plurality of versions comprises (i) an associated state of each farm amongst the plurality of farms, and (ii) one or more associated events. The system 100 preprocesses (or codifies) using the one or more pre-processing techniques as known in the art to obtain the set of pre-processed data comprising the plurality of versions of the plurality of farms which is stored in systematic manner all these interactions with farms, along with knowledge and inferences, that bring changes to a farm's state, that is referred as farm versions. The set of pre-processed data further includes cause-effect relationships between the effect, i.e., each farm's version details, along with the causes, referred as one or more factors that led to change in the version. This results in creation of a version management system (within the system 100 - not shown in FIGS.) for farms. All these semantic inferences and relationships are further stored in the version management system as states, farm configurations, metadata, and the like. The storage and extraction are carried out by the system 100 to distinctly identify the set of activities which can be clubbed together to form a version.

At step 206 of the method of the present disclosure, the one or more hardware processors 104 determining at least a subset of parameters amongst the plurality of parameters based on the set of pre-processed data comprising the plurality of versions of the plurality of farms. For instance, amongst the plurality of parameters, the subset of parameters may include, temporal soil health, yield improvement over period of time or multiple seasons, storage of soil carbon over the seasons, reduction in the carbon footprint, farm's resilience to calamities, and the like. It is to be understood by a person having ordinary skill in the art or person skilled in the art that the above examples of parameters may vary depending on the implementation of the system 100 and the method and the farm type and location at which the farm is present, and such examples of parameters shall not be construed as limiting the scope of the present disclosure. Below Table 2 illustrates two farms with various states/versions attained during the season. The state/version changes for the farms for SOC and Soil Moisture as shown as two parameters.

Table 2

| Farm | | Versions | | | |
|---|---|---|---|---|---|
| | Versions | F1.2 | F1.5 | F1.9 | F2.0 |
| F1 | SOC | 2.07 | 2.075 | 2.08 | 2.14 |
| | SM | 25.4 | 29.3 | 32.7 | 27.6 |

(continued)

| | | Versions | | | |
|---|---|---|---|---|---|
| | Versions | F2.1 | F2.3 | F2.7 | F.30 |
| F2 | SOC | 2.67 | 2.68 | 2.685 | 2.69 |
| | SM | 19.5 | 27.5 | 21.4 | 25.2 |

At step 208 of the method of the present disclosure, the one or more hardware processors 104 computing, via the one or more hardware processors, a farm portability score for each of the plurality of farms based on the at least the subset of parameters and the associated versions. The farm portability score is computed as a function of the subset of parameters, in one example embodiment. For instance, the subset of parameters includes, but is not limited to, temporal soil health, crop yield from multiple seasons, greenhouse gas (GHG) emissions over multiple seasons or years, ability of the farm to handle pest(s), disease(s), or other natural calamities. In such scenario, the farm portability score (FPS) = f(temporal soil health (TSH), crop yield (CY) from multiple seasons, greenhouse gas (GHG) emissions over multiple seasons or years, ability of the farm to handle pest(s), disease(s) or other natural calamities etc.). The expression "temporal soil health" refers to the health of the soil in terms of one or more soil attributes such as soil carbon, Nitrogen, pH, electrical conductivity, and the like. Temporal change in these parameters after cultivation of various crops may be (or will be) considered. Positive change or increase in parameters such as soil carbon, nitrogen etc. denotes good soil health being maintained and is further contributing positively to the FPS computation.

The expression "crop yield from multiple seasons" refers to 'yield' which could be obtained from non-invasive ways such as based on regression-based models (e.g., models as known in the art) derived using satellite and weather datasets for each season/crop. Additionally yield could be also measured from the ground or estimated from other techniques such as physical process-based models as known in the art. An average yield from the region can also be considered which contributes positively to the FPS computation.

The expression "GHG emissions over multiple years" refers to emissions wherein adopted farming practices across each season and crop have significant impact on the carbon, N2O, CO2, CH4 emissions. Any available carbon models such as Century, DeNitrification-DeComposition (DNDC), HOLOS (e.g., a whole-farm model that estimates greenhouse gas (GHG) emissions), and the like would be used along with remote sensing indicators obtained during each season for estimation of sequestrations or emissions of these GHG's. Positive temporal change over multiple years leads to better FPS computation.

FPS can have score between 0 to 100 where 100 indicates ideal farm for portability (which might be rarest case). Values towards 100 are better for portable farms, however values towards 0 are not suitable for portable farms and those farms cannot be portable at present. Estimation of FPS is carried out temporally that is every season which may add or remove farms into the subset of portable (target) farms.

FPS can be represented in mathematical form as below:

$$\mathbf{FPS = w1*TSH + w2*CY + w3*GHG}$$

Here w1, w2, w3 are the weights for temporal soil health, crop yield and GHG emissions respectively. It is to be understood by a person having ordinary skill in the art or person skilled in the art the above representation of computing the FPS shall not be construed as limiting the scope of the present disclosure.

TSH has the values between 0 to 100. For each of the monitoring seasons, TSH will have one value between 0 to 100 and the normalized value of TSH or average TSH is estimated and represented as TSH for calculation.

Crop Yield has values between 0 to 100. Crop yield for each season is compared with regional average yield and converted to the scale of 0 to 100. Normalized yield or average yield is estimated for a farm and represented as CY for calculation.

GHG emissions has values between 0 to 100. If there is emission from the farms, values will be towards zero and if there is sequestration, values will be towards 100. Each crop/season there will be net amount of carbon emission or carbon sequestration. Depending upon the carbon emission or carbon sequestration, each farm for each season gets value between 0 to 100. Normalized GHG value or average GHG is estimated for a farm and represented as GHG for calculation.

It is assumed by the system 100 and the method that the weights as w1 = 0.3, w2 = 0.35 and w3 = 0.35. Below Table 3 illustrates the FPS for sample farms.

Table 3

| Farms | TSH | CY | GHG | FPS |
|---|---|---|---|---|
| P1 | 91.59 | 94.52 | 93.01 | 93.11 |
| P2 | 89.11 | 83.8 | 87.55 | 86.7 |
| P3 | 75.65 | 78.23 | 82.65 | 79 |
| P1 | 61.95 | 64.67 | 65.76 | 64.23 |
| P2 | 49.09 | 41.81 | 34.45 | 41.41 |

At step 210 of the method of the present disclosure, the one or more hardware processors 104 identify one or more target farms amongst the plurality of farms based on the farm portability score. If the threshold for portability is 70, then P1, P2, P3 are the portable farms based on the above Table 1. It is to be understood by a person having ordinary skill in the art or person skilled in the art that the above Table 1 is an exemplary depiction of farms, parameters, and FPS and such table shall not be construed as limiting the scope of the present disclosure.

At step 212 of the method of the present disclosure, the one or more hardware processors 104 analyze spatial and temporal similarity of one or more source farms and the one or more target farms to obtain a farm portability similarity index for each of the one or more target farms.

At step 214 of the method of the present disclosure, the one or more hardware processors 104 determine an optimal state for each of the one or more target farms based on the farm portability similarity index and identifying an optimal traversal route for each of the one or more target farms to transform each target farm from a current state to attain the optimal state. The above steps of 212 and 214 are better understood by way of following description.

In an embodiment of the present disclosure, the one or more source farms refer to a farm that has executed various instructions generated by the system 100 to attain desired farm state and that meets the required performance affecting parameters. In other words, the source farms are cultivating crops as intended and desired state during each season is achieved. Such source farm may be either co-located with respect to target farms, or may be in a different region (e.g., distance between the target farm and source farm is say 'x', where value of 'x' may be in meters, kilometers and may be either within same village, city, state, country, or may be in a different village, state, country, and the like). Target farm refers to a farm that is currently not cultivating crops as intended or is not in a desired state as per the observations and analysis carried out by the system 100. Computation of the farm portability similarity index may be better understood by way of following description. For instance, farm portability similarity index (SI or FPSI) is a function of spatial similarity and temporal similarity between the one or more source farms and the one or more target farms. In other words, farm portability similarity index (SI or FPSI) = f(Spatial similarity, temporal similarity). Here, SI indicates, a match between the target farm and $k^{th}$ neighbor farm, where k can be any farm in the vicinity of the source farm to be ported. Spatial similarity (SS) refers to a similarity in terms of spatial location of portable and kth neighbor farm in terms of agroclimatic zone, weather patterns, soil, and the like. Temporal similarity (TS) refers to a similarity in terms of various parameters, activities happening over the portable farm and $k^{th}$ neighbor farm over period. The 'temporal similarity' is dynamic in nature as compared to 'spatial similarity'. FPSI may have a value between 0 to 100 where values towards 100 indicates high similarity between source and target farm, however values towards 0 indicate poor (or not so good) similarity between source and target farm. The farm portability similarity index (FPSI) can be represented in mathematical form as below

$$FPSI = w1*SS + w2*TS$$

Here w1 and w2 are the weights assigned to spatial and temporal similarity.

It is to be understood by a person having ordinary skill in the art or person skilled in the art that the above representation of computing the FPSI shall not be construed as limiting the scope of the present disclosure.

Spatial similarity is calculated in terms of static parameters such as agro-climatic zone, weather pattern, soil, and the like. SS is the weighted average of all the static parameters available for the source farm and target farm and may have values between 0 to 100.

Temporal similarity is calculated based on activities happening over the source farm and target farm and may have values between 0 to 100.

It is assumed by the system 100 and the method that equal weightage to spatial and temporal similarity (w1=0.5, w2 = 0.5) are given wherein there are 10 farms in the region for which FPSI is estimated between each of the target farms (P1, P2, P3) and source farms (F1-F10). Below Table 4, Table 5, and Table 6 illustrate exemplary FPSI computation, and these tables shall not be construed as limiting the scope of the present disclosure.

Table 4

| FPSI between P1 and F1-F10 | | | | |
|---|---|---|---|---|
| **Source Farm** | **Target Farm** | **SS** | **TS** | **FPSI** |
| **P1** | **F1** | **97.5** | **92.5** | **95** |
| **P1** | **F2** | **89** | **89** | **89** |
| P1 | F3 | 38.5 | 56.2 | 47.35 |
| **P1** | **F4** | **91.5** | **84.5** | **88** |
| P1 | F5 | 77 | 69.2 | 73.1 |
| P1 | F6 | 34.8 | 41 | 37.9 |
| **P1** | **F7** | **85** | **83** | **84** |
| P1 | F8 | 72.5 | 77.3 | 74.9 |
| P1 | F9 | 60.4 | 70.9 | 65.65 |
| **P1** | **F10** | **78.4** | **85.6** | **82** |

Table 5

| FPSI between P2 and F1-F10 | | | | |
|---|---|---|---|---|
| **Source Farm** | **Target Farm** | **SS** | **TS** | **FPSI** |
| P2 | F1 | 67.2 | 79.4 | 73.3 |
| P2 | F2 | 48.7 | 67.2 | 57.95 |
| P2 | F3 | 49.4 | 62.5 | 55.95 |
| P2 | F4 | 71.2 | 65 | 68.1 |
| **P2** | **F5** | **91.5** | **90.5** | **91** |
| P2 | F6 | 68.2 | 73.5 | 70.85 |
| P2 | F7 | 71.8 | 62.3 | 67.05 |
| **P2** | **F8** | **71.8** | **86.2** | **79** |
| P2 | F9 | 34.8 | 48.1 | 41.45 |
| P2 | F10 | 74 | 78.1 | 76.05 |

Table 6

| FPSI between P3 and F1-F10 | | | | |
|---|---|---|---|---|
| **Source Farm** | **Target Farm** | **SS** | **TS** | **FPSI** |
| P3 | F1 | 65.8 | 51.7 | 58.75 |
| P3 | F2 | 45.7 | 59.2 | 52.45 |
| **P3** | **F3** | **87.2** | **94.8** | **91** |
| P3 | F4 | 56.4 | 55 | 55.7 |
| P3 | F5 | 49.7 | 57.9 | 53.8 |
| **P3** | **F6** | **88** | **88** | **88** |
| P3 | F7 | 47.1 | 50 | 48.55 |

(continued)

| FPSI between P3 and F1-F10 | | | | |
|---|---|---|---|---|
| **Source Farm** | **Target Farm** | **SS** | **TS** | **FPSI** |
| P3 | F8 | 60 | 53.6 | 56.8 |
| **P3** | **F9** | **82.6** | **89.4** | **86** |
| P3 | F10 | 56.9 | 67 | 61.95 |

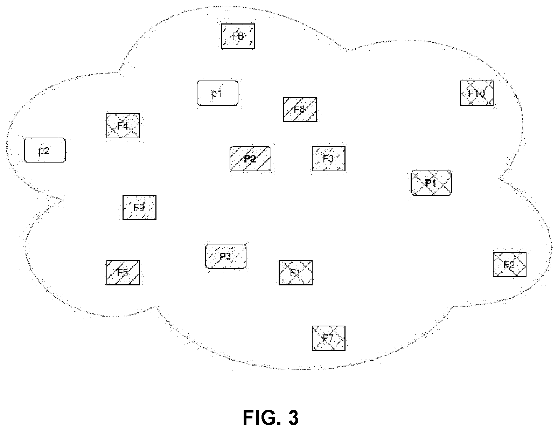

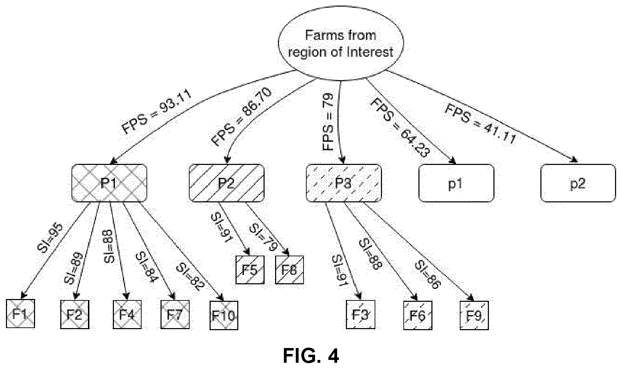

The rows in bold are the rows with highest FPSI between any of the P1-P3 and associated source farm. Additionally, FIGS. 3 and 4 may be referred. From the above tables, source farm P1 can be ported to five target farms (F1, F2, F4, F7 and F9), source farm P2 can be ported to two target farms F5 and F8 and source farm P3 can be ported to target farms F3, F6 and F9.

In other words, the optimal traversal routes practiced by the above source farms may be followed by the target farms that are to be ported. For instance, the optimal traversal route comprises a first set of instructions to be performed by each of the one or more target farms. The first set of instructions may comprise, but is not limited to various field operations, activities, and the like that are followed by the source farms. These operations, activities and various practices are continually monitored by the system 100. In other words, the system 100 monitors the current state, and one or more intermediary states of the one or more target farms during the execution of the first set of instructions. During and after execution of the first set of instructions by the one or more target farms, the system 100 identifies identifying one or more deviations in the one or more intermediary states of each of the one or more target farms. The one or more deviations are identified based on a comparison of the one or more intermediary states and one or more reference intermediary states. For instance, the system 100 stores benchmark values/states that are desired optimal/end states for various farms which serve as reference intermediary states. The intermediary states and the current states of each target farm (or output of each state) are compared with the reference intermediary states to determine the one or more deviations. If there are no deviations, then the target farms are operating and following the intended/desired practices to cultivate desired crops in terms of yield, ROI, and the like. In other words, the desired optimal state is attained by a target farm under consideration when the target farm's performance affecting parameters reach an associated threshold. For instance, the associated performance affecting parameters may include, soil health and fertility, yield, quality, RoI, water intake threshold, greenhouse gas (GHS) emission, sequestered carbon, and the like. It is to be understood by a person having ordinary skill in the art or person skilled in the art that the above examples of performance affecting parameters of each target/source farm shall not be construed as limiting the scope of the present disclosure. Below Table 7, Table 8 and Table 9 show the example variations between expected and actual states of parameters. Expected SOC is the SOC attained or expected to attain after following the practices/operations/activities suggested by the system. Actual SOC is the SOC attained in actual at each state/version.

Table 7

| Case 1 represents the farm who is not following the system 100 and hence lagging to reach the desired end state as suggested by the system 100. Due to variations between what was suggested and what was followed, the mentioned farm will need one or more state/season to reach the desired end state. | | | | | |
|---|---|---|---|---|---|
| **State** | **Current State** | **Inter1** | **Inter2** | **Inter3** | **Target State** | ... |
| Version | F0.9 | F1.9 | F2.7 | F3.6 | F4.0 | F4.4 |
| Expected SOC | 2.1 | 2.2 | 2.4 | 2.7 | 3 | |
| Actual Progress | 2.1 | 2.2 | 2.35 | 2.61 | 2.89 | 3 |

Table 8

| Case 2 is the ideal case where farmer/entity has followed the practices suggested by the system 100, hence actual SOC attained at each state is matching with what was expected by the system. | | | | | |
|---|---|---|---|---|---|
| **State** | **Current Sate** | **Inter1** | **Inter2** | **Inter3** | **Target State** |
| Version | F0.9 | F1.9 | F2.7 | F3.6 | F4.0 |
| Expected SOC | 2.1 | 2.2 | 2.4 | 2.7 | 3 |

(continued)

| Case 2 is the ideal case where farmer/entity has followed the practices suggested by the system 100, hence actual SOC attained at each state is matching with what was expected by the system. | | | | | |
|---|---|---|---|---|---|
| State | Current Sate | Inter1 | Inter2 | Inter3 | Target State |
| Actual Progress | 2.1 | 2.2 | 2.4 | 2.7 | 3 |

Table 9

| Case 3 is the case close to ideal where there are only minor variations, hence there are very minor changes in the expected and actual yield (tons/hectare) values. | | | | |
|---|---|---|---|---|
| State | Current State | Inter1 (intermediary stage 1) | Inter2 (intermediary stage 2) | Target State |
| Version | F1.0 | F2.0 | F3.0 | F4.0 |
| Expected SOC | 2.5 t/ha | 2.8 t/ha | 3 t/ha | 3.4 t/ha |
| Actual Progress | 2.5 t/ha | 2.78 t/ha | 2.99 t/ha | 3.4 t/ha |

In case, the one or more deviations are determined from the comparison between the current state, the one or more intermediary states of the target farms and a reference current state and the reference intermediary states, then the system 100 generate an updated optimal traversal route comprising a second set of instructions to be performed by each of the one or more target farms. The second set of instructions comprises instructions that are (i) different from the first set of instructions, or (ii) at least a subset of the first set of instructions. In other words, an entirely new set of practices, field operations, activities are generated by the system 100 that are provided to the farmer/laborer of the target farms to carry out such that the target farms attain the desired optimal state. Alternatively, the system 100 may request the farmer/laborer of specific target farms to continue with some or all of the practices, field operations, activities that are part of the first set of instructions and additionally also communicate a new set of instructions (e.g., the second set of instructions), which may include new field practices, operations, and new activities to be performed such that the target farms attain the desired optimal state. The first set of instructions and the second set of instructions are generated using at least one of one or more semantic ontological database, and one or more knowledge graphs. The one or more semantic ontological database and the one or more knowledge graphs include information on each farm, and such information includes real-time parameters, near real-time parameters, historical data, pertaining to each farm, the pre-processed parameters that are converted into one or more versions for each of the farms, farm portability score for each farm, spatial and temporal similarity of one or more source farms and the one or more target farms, optimal state for each target farm, optimal traversal route for each farm to transform its current state to desired state, various field operations and observations carried out by farmer(s), laborers or other stakeholders, natural events, data monitored using non-invasive and on-field sensors such as satellite images, data on soil nutrient (N, P, K, etc.) and moisture, temperature, pH, EC, $CO_2$ sensors etc., data provided by the farmers via human sensing, various intermediate states, inferences generated out of various actions, and the like. FIG. 3, with reference to FIGS. 1-2, depicts an exemplary view of farm portability similarity index between one or more source farms and one or more target farms, in accordance with an embodiment of the present disclosure. FIG. 4, with reference to FIGS. 1-3, depicts an exemplary view of the one or more source farms and the one or more target farms and associated versions for which instructions need to be ported to attain desired optimal state, with respective farm portability similarity index and farm portability score computed therein, in accordance with an embodiment of the present disclosure. In the present disclosure, the instructions are generated by the system 100 for one or more versions of the one or more target farms. These instructions or subset of instructions are executed for the one or more versions based on their respective farm states.

The above steps of generating/identifying an optimal traversal route for the target farms, generating instructions to be performed by the target farms, and continually monitoring the current state and the one or more intermediary states for determining deviation(s) and ensuring optimal desired state is attained by each target farm, may be further better understood by way of following description.

The system 100 and method to estimate the optimal traversal route for performing farm operations to reach the desired optimal state such as high carbon sequestration with optimal yield. In a region of interest, the system 100 may have data for multiple farms all stored in multiple versions and across multiple seasons. Moreover, current, or present state of the farm is also available for all individual farms. All of these has been managed into semantic ontological database.

Depending on the current or present state (and associated version) of the farm and desired end state by the user, the system 100 generates an optimized traversal route (set of operations and activities that needs to be followed) by making use of the one or more semantic ontological databases and the one or more knowledge graphs. The optimized traversal route generation is better understood by way of following scenarios described herein.

**Scenario A:** Only desired end state is known from a user/farmer (for example, improvement of soil organic carbon (SOC) by p% (e.g., 30%)). In this case, the system 100 plans to make use of the information available from feature 1 on the current state of the farm (say farm is currently at version 2.1). Moreover, data on temporal trend of soil organic carbon after each associated activity, crops grown, practices followed (in terms of tillage, crop cultivated, crop density, management of crop residue, irrigation, etc.) during each of the past season stored in the semantic ontological database is also accessed by the system 100. Based on the information available from various versions of the target/source farm and associated change in soil organic carbon, the method of the present disclosure and the system 100 determine practices/operations which impact on the farms SOC and devises an optimal traversal route or a plan of action to improve the SOC by 30%. Here this can be achieved in single or multiple seasons depending upon the overall performance of the target farm, desired end state and current state of the target farm.

**Scenario B:** Use of available versions from nearby farms (e.g., source farms) to reach the desired end state (for example, improvement of soil organic carbon by 30%). As mentioned in the scenario A, current version of the target farm based on the available information from feature 1 is say 2.1. In addition to this, the system 100 has the historical information/data and performance of the crop in terms of SOC. Moreover, information on neighboring (or source) farms across various versions and seasons is also available and stored in the memory 102 or the database. The system 100 and the method detect the best suitable neighbor farm (or source farm) and specific operations from that source farm to ensure the target farm reaches the desired end state. In this scenario, the system 100 makes use of knowledge/information available from surrounding farms and version associated with end state can also be known.

**Scenario C:** Desired end state with certain constraints (for example, improvement of soil organic carbon by 30% in two seasons). Approach proposed in scenario A is modified with a constraint to achieve the desired end state in two seasons. In such cases, optimized traversal route (set of operations) is modified however cost component may get added to it as the time to reach the desired end state is reduced by the farmer.

As mentioned earlier, conventional approaches lack in traceability of various factors that led to changes in farms states. Further, conventional approaches for managing farms, and associated data obtained from various sources do not fully allow for employing farm's practices to other similar conditions as they may have adverse effects over other identical/similar crops during cultivations. Thus, such traditional practices are not helping in optimization of farm operations and further fail to achieve desired goals. Moreover, presently, there are no systems devised in place which stores the data, information, knowledge, outputs in a versioned manner, that can enable tracing the factors that led to changes in a farm's state. Embodiments of the present disclosure provide system and method that monitor and manage farms in versioned manner, wherein the system 100 considers current and historical data and devises a plan of action at a particular instant in current season. It is to be noted that not all desired states are possible to achieve in single season. However, the system and method of the present disclosure, considers desired end state and identifies/generates an optimal traversal route for target farms to achieve desired optimal end state over one or multiple seasons. Moreover, the system 100 implement the method as described herein to decide the target farms for portability to transform itself from current state to desired optimal state which best represent the region in terms of achieving better yield, soil health, more carbon sequestration based on farm portability score, and the like. This is achieved by identifying source farms which are compatible with target farms. The system 100 and method of the present disclosure further measure extent of the instructions performed by the farms to attain the desired optimal state. This measure gives an indication of performance of each farm.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

    receiving, via one or more hardware processors, a plurality of parameters of a plurality of farms (202), wherein the plurality of parameters are captured using one or more sensing devices at a plurality of time periods;
    pre-processing, via the one or more hardware processors, the plurality of parameters to obtain a set of pre-processed data comprising a plurality of versions of the plurality of farms (204), wherein each version from the plurality of versions comprises (i) an associated state of each farm amongst the plurality of farms, and (ii) one or more associated events;
    determining, via the one or more hardware processors, at least a subset of parameters amongst the plurality of parameters based on the set of pre-processed data comprising the plurality of versions of the plurality of farms (206);
    computing, via the one or more hardware processors, a farm portability score for each of the plurality of farms based on at least the subset of parameters (208);
    identifying, via the one or more hardware processors, one or more target farms amongst the plurality of farms based on the farm portability score (210);
    analyzing, via the one or more hardware processors, spatial and temporal similarity of one or more source farms and the one or more target farms to obtain a farm portability similarity index for each of the one or more target farms (212); and
    determining, via the one or more hardware processors, an optimal state for each of the one or more target farms based on the farm portability similarity index and identifying an optimal traversal route for each of the one or more target farms to transform each target farm from a current state to the optimal state (214).

2. The processor implemented method as claimed in claim 1, wherein the optimal traversal route comprises a first set of instructions to be performed by each of the one or more target farms.

3. The processor implemented method as claimed in claim 2, further comprising monitoring the current state, and one or more intermediary states of the one or more target farms based on the first set of instructions being performed.

4. The processor implemented method as claimed in claim 3, further comprising identifying one or more deviations in the one or more intermediary states of each of the one or more target farms based on the first set of instructions being performed, wherein the one or more deviations are identified based on a comparison of the one or more intermediary states and one or more reference intermediary states.

5. The processor implemented method as claimed in claim 4, further comprising generating an updated optimal traversal route comprising a second set of instructions to be performed by each of the one or more target farms based on the comparison, wherein the second set of instructions comprises instructions that are (i) different from the first set of instructions, or (ii) at least a subset of the first set of instructions.

6. The processor implemented method as claimed in claim 5, wherein the first set of instructions and the second set of instructions are generated using at least one of one or more semantic ontological database, and one or more knowledge graphs.

7. The processor implemented method as claimed in claim 1, wherein the optimal state is attained by each of the one or more target farms when one or more performance affecting parameters reach an associated predefined threshold.

8. A system (100), comprising:

> a memory (102) storing instructions;
> one or more communication interfaces (106); and
> one or more hardware processors (104) coupled to the memory (102) via the one or more communication interfaces (106), wherein the one or more hardware processors (104) are configured by the instructions to:
>
>> receive a plurality of parameters of a plurality of farms, wherein the plurality of parameters are captured using one or more sensing devices at a plurality of time periods;
>> pre-process the plurality of parameters to obtain a set of pre-processed data comprising a plurality of versions of the plurality of farms, wherein each version from the plurality of versions comprises (i) an associated state of each farm amongst the plurality of farms, and (ii) one or more associated events;
>> determine at least a subset of parameters amongst the plurality of parameters based on the set of pre-processed data comprising the plurality of versions of the plurality of farms;
>> compute a farm portability score for each of the plurality of farms based on at least the subset of parameters;
>> identify one or more target farms amongst the plurality of farms based on the farm portability score;
>> analyze spatial and temporal similarity of one or more source farms and the one or more target farms to obtain a farm portability similarity index for each of the one or more target farms; and
>> determine an optimal state for each of the one or more target farms based on the farm portability similarity index and identifying an optimal traversal route for each of the one or more target farms to transform each target farm from a current state to the optimal state.

9. The system as claimed in claim 8, wherein the optimal traversal route comprises a first set of instructions to be performed by each of the one or more target farms.

10. The system as claimed in claim 9, wherein the one or more hardware processors are further configured by the instructions to monitor the current state, and one or more intermediary states of the one or more target farms based on the first set of instructions being performed.

11. The system as claimed in claim 10, wherein the one or more hardware processors are further configured by the instructions to identifying one or more deviations in the one or more intermediary states of each of the one or more target farms based on the first set of instructions being performed, wherein the one or more deviations are identified based on a comparison of the one or more intermediary states and one or more reference intermediary states.

12. The system as claimed in claim 11, wherein the one or more hardware processors are further configured by the instructions to generate an updated optimal traversal route comprising a second set of instructions to be performed by each of the one or more target farms based on the comparison, wherein the second set of instructions comprises instructions that are (i) different from the first set of instructions, or (ii) at least a subset of the first set of instructions.

**13.** The system as claimed in claim 12, wherein the first set of instructions and the second set of instructions are generated using at least one of one or more semantic ontological database, and one or more knowledge graphs stored in the memory.

**14.** The system as claimed in claim 8, wherein the optimal state is attained by each of the one or more target farms when one or more associated performance affecting parameters reach an associated predefined threshold.

**15.** One or more non-transitory machine-readable information storage mediums comprising one or more instructions which when executed by one or more hardware processors cause:

receiving a plurality of parameters of a plurality of farms, wherein the plurality of parameters are captured using one or more sensing devices at a plurality of time periods;
pre-processing the plurality of parameters to obtain a set of pre-processed data comprising a plurality of versions of the plurality of farms, wherein each version from the plurality of versions comprises (i) an associated state of each farm amongst the plurality of farms, and (ii) one or more associated events;
determining at least a subset of parameters amongst the plurality of parameters based on the set of pre-processed data comprising the plurality of versions of the plurality of farms;
computing a farm portability score for each of the plurality of farms based on at least the subset of parameters;
identifying one or more target farms amongst the plurality of farms based on the farm portability score;
analyzing spatial and temporal similarity of one or more source farms and the one or more target farms to obtain a farm portability similarity index for each of the one or more target farms; and
determining an optimal state for each of the one or more target farms based on the farm portability similarity index and identifying an optimal traversal route for each of the one or more target farms to transform each target farm from a current state to the optimal state.

**Amended claims in accordance with Rule 137(2) EPC.**

**1.** A processor implemented method, comprising:

receiving, via one or more hardware processors, a plurality of parameters of a plurality of farms (202), wherein the plurality of parameters are captured using one or more sensing devices at a plurality of time periods;
pre-processing, via the one or more hardware processors, the plurality of parameters to obtain a set of pre-processed data comprising a plurality of versions of the plurality of farms (204), wherein each version from the plurality of versions comprises (i) an associated state of each farm amongst the plurality of farms, and (ii) one or more associated events;
determining, via the one or more hardware processors, at least a subset of parameters amongst the plurality of parameters based on the set of pre-processed data comprising the plurality of versions of the plurality of farms (206);
computing, via the one or more hardware processors, a farm portability score for each of the plurality of farms based on at least the subset of parameters (208);
identifying, via the one or more hardware processors, one or more target farms amongst the plurality of farms based on the farm portability score (210);
analyzing, via the one or more hardware processors, spatial and temporal similarity of one or more source farms and the one or more target farms to obtain a farm portability similarity index for each of the one or more target farms (212);
determining, via the one or more hardware processors, an optimal state for each of the one or more target farms based on the farm portability similarity index and identifying an optimal traversal route for each of the one or more target farms to transform each target farm from a current state to the optimal state (214); and
generating an updated optimal traversal route comprising a second set of instructions to be performed by each of the one or more target farms based on the comparison, wherein the second set of instructions comprises instructions that are (i) different from the first set of instructions, or (ii) at least a subset of the first set of instructions.

**2.** The processor implemented method as claimed in claim 1, wherein the optimal traversal route comprises a first set of instructions to be performed by each of the one or more target farms.

**3.** The processor implemented method as claimed in claim 2, further comprising monitoring the current state, and one or more intermediary states of the one or more target farms based on the first set of instructions being performed.

4. The processor implemented method as claimed in claim 3, further comprising identifying one or more deviations in the one or more intermediary states of each of the one or more target farms based on the first set of instructions being performed, wherein the one or more deviations are identified based on a comparison of the one or more intermediary states and one or more reference intermediary states.

5. The processor implemented method as claimed in claim1, wherein the first set of instructions and the second set of instructions are generated using at least one of one or more semantic ontological database, and one or more knowledge graphs.

6. The processor implemented method as claimed in claim 1, wherein the optimal state is attained by each of the one or more target farms when one or more performance affecting parameters reach an associated predefined threshold.

7. A system (100), comprising:

   a memory (102) storing instructions;
   one or more communication interfaces (106); and
   one or more hardware processors (104) coupled to the memory (102) via the one or more communication interfaces (106), wherein the one or more hardware processors (104) are configured by the instructions to:

      receive a plurality of parameters of a plurality of farms, wherein the plurality of parameters are captured using one or more sensing devices at a plurality of time periods;
      pre-process the plurality of parameters to obtain a set of pre-processed data comprising a plurality of versions of the plurality of farms, wherein each version from the plurality of versions comprises (i) an associated state of each farm amongst the plurality of farms, and (ii) one or more associated events;
      determine at least a subset of parameters amongst the plurality of parameters based on the set of pre-processed data comprising the plurality of versions of the plurality of farms;
      compute a farm portability score for each of the plurality of farms based on at least the subset of parameters;
      identify one or more target farms amongst the plurality of farms based on the farm portability score;
      analyze spatial and temporal similarity of one or more source farms and the one or more target farms to obtain a farm portability similarity index for each of the one or more target farms;
      determine an optimal state for each of the one or more target farms based on the farm portability similarity index and identifying an optimal traversal route for each of the one or more target farms to transform each target farm from a current state to the optimal state; and
      generate an updated optimal traversal route comprising a second set of instructions to be performed by each of the one or more target farms based on the comparison, wherein the second set of instructions comprises instructions that are (i) different from the first set of instructions, or (ii) at least a subset of the first set of instructions.

8. The system as claimed in claim 7, wherein the optimal traversal route comprises a first set of instructions to be performed by each of the one or more target farms.

9. The system as claimed in claim 8, wherein the one or more hardware processors are further configured by the instructions to monitor the current state, and one or more intermediary states of the one or more target farms based on the first set of instructions being performed.

10. The system as claimed in claim 9, wherein the one or more hardware processors are further configured by the instructions to identifying one or more deviations in the one or more intermediary states of each of the one or more target farms based on the first set of instructions being performed, wherein the one or more deviations are identified based on a comparison of the one or more intermediary states and one or more reference intermediary states.

11. The system as claimed in claim 7, wherein the first set of instructions and the second set of instructions are generated using at least one of one or more semantic ontological database, and one or more knowledge graphs stored in the memory.

12. The system as claimed in claim 7, wherein the optimal state is attained by each of the one or more target farms when one or more associated performance affecting parameters reach an associated predefined threshold.

13. One or more non-transitory machine-readable information storage mediums comprising one or more instructions which when executed by one or more hardware processors cause:

receiving a plurality of parameters of a plurality of farms, wherein the plurality of parameters are captured using one or more sensing devices at a plurality of time periods;

pre-processing the plurality of parameters to obtain a set of pre-processed data comprising a plurality of versions of the plurality of farms, wherein each version from the plurality of versions comprises (i) an associated state of each farm amongst the plurality of farms, and (ii) one or more associated events;

determining at least a subset of parameters amongst the plurality of parameters based on the set of pre-processed data comprising the plurality of versions of the plurality of farms;

computing a farm portability score for each of the plurality of farms based on at least the subset of parameters;

identifying one or more target farms amongst the plurality of farms based on the farm portability score;

analyzing spatial and temporal similarity of one or more source farms and the one or more target farms to obtain a farm portability similarity index for each of the one or more target farms;

determining an optimal state for each of the one or more target farms based on the farm portability similarity index and identifying an optimal traversal route for each of the one or more target farms to transform each target farm from a current state to the optimal state; and

generating an updated optimal traversal route comprising a second set of instructions to be performed by each of the one or more target farms based on the comparison, wherein the second set of instructions comprises instructions that are (i) different from the first set of instructions, or (ii) at least a subset of the first set of instructions.

SYSTEM
100

MEMORY
102

DATABASE
108

HARDWARE
PROCESSOR(S)
104

INTERFACE(S)
106

FIG. 1

receiving a plurality of parameters of a plurality of farms, wherein the plurality of parameters are captured using one or more sensing devices at a plurality of time periods — 202

pre-processing the plurality of parameters to obtain a set of pre-processed data comprising a plurality of versions of the plurality of farms, wherein each version from the plurality of versions comprises (i) an associated state of each farm amongst the plurality of farms, and (ii) one or more associated events — 204

determining at least a subset of parameters amongst the plurality of parameters based on the set of pre-processed data comprising the plurality of versions of the plurality of farms — 206

computing a farm portability score for each of the plurality of farms based on at least the subset of parameters — 208

identifying one or more target farms amongst the plurality of farms based on the farm portability score — 210

analyzing spatial and temporal similarity of one or more source farms and the one or more target farms to obtain a farm portability similarity index for each of the one or more target farms — 212

determining an optimal state for each of the one or more target farms based on the farm portability similarity index and identifying an optimal traversal route for each of the one or more target farms to transform each target farm from a current state to attain the optimal state — 214

**FIG. 2**

FIG. 3

FIG. 4

**EP 4 435 683 A1**

Europäisches
Patentamt

European
Patent Office

Office européen
des brevets

# EUROPEAN SEARCH REPORT

Application Number

**EP 23 19 5732**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/078375 A1 (ETHINGTON JAMES [US] ET AL) 17 March 2016 (2016-03-17)<br>* abstract *<br>* paragraph [0021] *<br>* paragraph [0006] - paragraph [0008] *<br>* paragraphs [0044], [0145] *<br>* paragraph [0044] - paragraph [0046] *<br>* paragraph [0126] - paragraph [0128] *<br>* paragraph [0038] - paragraph [0040] *<br>* paragraph [0145] - paragraph [0148] *<br>* paragraph [0160] - paragraph [0167] *<br>* paragraphs [0053], [0098] - [0156] *<br>----- | 1-15 | INV.<br>G06Q10/00<br>G06Q10/04<br>G06Q10/06<br>G06Q50/02 |
| X | US 2021/068334 A1 (MUTAHI JULIET [FR] ET AL) 11 March 2021 (2021-03-11)<br>* the whole document *<br>----- | 1-15 | |
| A | US 2022/061236 A1 (GUAN KAIYU [US] ET AL) 3 March 2022 (2022-03-03)<br>* the whole document *<br>----- | 1-15 | |
| | | | TECHNICAL FIELDS SEARCHED (IPC)<br><br>G06Q |

The present search report has been drawn up for all claims

| Place of search | Date of completion of the search | Examiner |
|---|---|---|
| Munich | 31 January 2024 | Anastasov, Yuliyan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

22

## ANNEX TO THE EUROPEAN SEARCH REPORT
## ON EUROPEAN PATENT APPLICATION NO.

EP 23 19 5732

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | | Publication date | Patent family member(s) | | Publication date |
|---|---|---|---|---|---|
| US 2016078375 | A1 | 17-03-2016 | AR | 102816 A1 | 29-03-2017 |
| | | | US | 2016078375 A1 | 17-03-2016 |
| | | | US | 2021383290 A1 | 09-12-2021 |
| | | | WO | 2016040654 A1 | 17-03-2016 |
| US 2021068334 | A1 | 11-03-2021 | CN | 112465287 A | 09-03-2021 |
| | | | US | 2021068334 A1 | 11-03-2021 |
| US 2022061236 | A1 | 03-03-2022 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321020023